Europäisches Patentamt

European Patent Office

Office européen des brevets

(19)

(11) Veröffentlichungsnummer: **0 125 320**
**B1**

(12) **EUROPÄISCHE PATENTSCHRIFT**

(45) Veröffentlichungstag der Patentschrift: **03.10.90**

(51) Int. Cl.⁵: **H 02 K 7/18, B 60 L 11/02**

(21) Anmeldenummer: **83103638.9**

(22) Anmeldetag: **14.04.83**

(54) Verwendung eines Fahrzeugs als Stromerzeugungsaggregat für fahrzeugfremde Stromverbraucher.

(43) Veröffentlichungstag der Anmeldung:
**21.11.84 Patentblatt 84/47**

(45) Bekanntmachung des Hinweises auf die
Patenterteilung:
**03.10.90 Patentblatt 90/40**

(84) Benannte Vertragsstaaten:
**AT BE CH DE FR GB IT LI**

(56) Entgegenhaltungen:
**WO-A-82/00117**
**CH-A- 156 513**
**DD-A- 43 595**
**DE-A-2 241 878**
**DE-A-2 307 798**

(73) Patentinhaber: **Heidelberg, Götz, Dipl.-Phys.**
**Am Hügel 16**
**D-8136 Starnberg-Percha (DE)**

(72) Erfinder: **Heidelberg, Götz, Dipl.-Phys.**
**Am Hügel 16**
**D-8136 Starnberg-Percha (DE)**

(74) Vertreter: **Klunker, Hans-Friedrich, Dr. et al**
**Patentanwälte Klunker . Schmitt-Nilson . Hirsch**
**Winzererstrasse 106**
**D-8000 München 40 (DE)**

Courier Press, Leamington Spa, England.

# Beschreibung

Es gibt eine ganze Fülle von Einsatzfällen, bei denen man an Orten, an denen kein Stromnetz zur Verfügung steht, oder eine Verbindung zum Stromnetz zu schwierig herzustellen wäre, elektrischen Strom, häufig in größerer Menge, benötigt. Als einige Beispiele aus einer Vielzahl von Einsatzfällen seien genannt: Baucamps in menschenleeren Gebieten, Forschungsstationen in menschenleeren Gebieten, abgelegene Baustellen, Gebirgshütten und dergleichen. Bisher hat man in derartigen Fällen gesonderte Stromerzeugungsaggregate, die üblicherweise durch eine Verbrennungsmotor angetrieben werden, vorgesehen. Diese Stromerzeugungsaggregate sind bei hohem Strombedarf sehr voluminös und werden in diesen Fällen bislang zumeist auf Fahrzeuganhängern montiert zum Einsatzort gebracht.

Es ist bekannt (DD—A—43 595, CH—A—156 513), brennkraftelektrisch angetriebene Fahrzeuge, die einen Verbrennungsmotor, einen von diesem antreibbaren Generator und mindestens einen Antriebs-Elektromotor aufweisen, als Stromerzeugungsaggregat für fahrzeugantriebsfremde Stromverbraucher einzusetzen.

Ferner ist ein brennkraftelektrisch angetriebenes Fahrzeug bekannt (WO 82/00117), das einen Verbrennungsmotor, einen von diesem antreibbaren Generator, vorzugsweise eine Pufferbatterie zur bedarfsweisen, kurzzeitigen Lieferung hoher elektrischer Energie, einen Schwungradspeicher und einen oder mehrere Antriebs-Elektromotoren aufweist. Eine Verwendung dieses Fahrzeugs als Stromerzeugungsaggregat für fahrzeugantriebsfremde Stromverbraucher ist nicht angegeben.

Gegenstand der Erfindung ist die Verwendung eines Fahrzeugs der Bauart, bei der ein kraftstoffverbrennender Motor, ein von dem Motor antreibbarer Generator, ein Schwungradspeicher, dem elektrische Energie zuführbar und entnehmbar ist, und ein oder mehrere antriebsradzugeordnete Elektromotoren vorgesehen sind, wobei der Generator, der Schwungradspeicher und der Elektromotor oder die Elektromotoren elektrisch miteinander verbunden sind, als Stromerzeugungsaggregat für einen oder mehrere fahrzeugantriebsfremde Stromverbraucher, deren kurzzeitig hoher Strombedarf mit Hilfe des Schwungsradspeichers gedeckt wird, wobei der Generator und/oder der Schwungradspeicher und/oder der Elektromotor oder die Elektromotoren mit hochkoerzitiven Dauermagneten und elektronischer Steuerung aufgebaut sind.

Das erfindungsgemäß verwendete Fahrzeug ist in der Lage, Strom in erheblicher Menge für fahrzeugantriebsfremde Stromverbraucher zu liefern. Wechselnder elektrischer Verbrauch und kurzzeitiger hoher Spitzenverbrauch des mindestens einen fahrzeugantriebsfremden Verbrauchers können ohne Leistungsänderung des kraftstoffverbrennenden Motors abgedeckt werden.

Elektronisch gesteuerte Dauermagnetmotoren sind besonders kompakt, gemessen am abgegebenen Drehmoment bzw. an der abgegebenen Leistung, und sind wegen der kommutatorlosen elektronischen Steuerung besonders wenig verschleißanfällig und besonders flexibel steuerbar. Elektromotoren dieses Typs sind in der EP—A—52343 sowie in der europäischen Patentanmeldung Nr. 82 104 526.7 genauer beschrieben. Bei einem elektronisch gesteuerten Dauermagnetgenerator kommen die vorstehend geschilderten Vorteile analog zum Tragen, wobei ebenfalls auf die beiden genannten europäischen Patentanmeldungen hingewiesen wird. Auch bei mit Dauermagneten aufgebautem Schwungradspeicher mit elektronisch gesteuerter Einspeisung elektrischer Energie und elektronisch gesteuerter Entnahme elektrischer Energie kommen die vorstehend geschilderten Vorteile zum Tragen, wobei der Flexibilität der Steuerung sowohl bei der Energieeinspeisung als auch bei der Energieentnahme besondere Bedeutung zukommt. Auch in diesem Zusammenhang wird auf die beiden genannten europäischen Patentanmeldungen sowie außerdem auf die EP—A—52345 hingewiesen, in der ein derartiger Schwungradspeicher genauer beschrieben ist.

Die hochkoerzitiven Dauermagnete der Elektromotoren und/oder des Generators und/oder des Schwungradspeichers sind vorzugsweise Dauermagnete aus einem Material auf der Basis eines oder mehrerer Elemente aus der Gruppe der seltenen Erden mit Kobalt, insbesondere Samarium-Kobalt-Magnete. Vorzugsweise arbeitet die elektronische Steuerung mit mindestens einem, die Relativstellung zwischen dem Stator und dem Läufer erfassenden Sensor, insbesondere ausgebildet als Hall-Sensor. Vorzugsweise sind die mit den Dauermagnetpolen zusammenwirkenden Elektromagnetpole gruppenweise oder einzeln für sich funktionstüchtig, also mit Stromversorgung und Steuerung ausgestattet, was man "multiple Bauweise" nennt. Vorzugsweise sind die mit den Dauermagnetpolen zusammenwirkenden Elektromagnetpole als Bauelemente vorgesehen, die vor dem Einbau einzeln mit einer Wicklung bzw. einer Spule versehen worden sind und einzeln am entsprechenden Tragteil befestigt worden sind, wobei diese Bauelemente untereinander gleich sind. Vorzugsweise unterscheidet sich die Anzahl der Dauermagnetpole geringfügig von der Anzahl der Elektromagnetpole. Diese bevorzugten Merkmale stellen nur einen Teil der insgesamt als günstig verfügbaren Merkmale derartiger Elektromotoren bzw. Generatoren bzw. Schwungradspeicher dar, und wegen weiterer bevorzugter Merkmale wird ausdrücklich nochmals auf die genannten europäischen Patentanmeldungen hingewiesen.

Bei Einsatzfällen der eingangs geschilderten Art hat man in aller Regel ein oder mehrere Fahrzeuge zur Verfügung, die mit kraftstoffverbrennenden Motoren stromnetzunabhängig arbeiten und von denen mindestens eins erfindungsgemäß als Stromerzeugungsaggregat verwendet wird. Aufgrund der Verwendung eines Fahrzeugs der speziellen, geschilderten Bauart hat man ein fahrzeugintegriertes Stromerzeugungsaggregat hoher Leistung zur Verfügung, ohne daß sich ansonsten an der Konstruktion des Fahrzeugs wesentliches geändert hätte und ohne daß man mühsam ein gesondertes, voluminöses Stromerzeugungsaggregat mitführen müßte. Auch auf die Einsatzvariabilität, z.B. 1, 2, ... oder alle von 5 insgesamt verfügbaren Fahrzeugen werden als Stromerzeugungsaggregat eingesetzt, auf die Möglichkeit des Einsatzes als echtes Fahrzeug bei Tag und als Stromerzeugungsaggregat bei Nacht sowie auf die Erleichterungen hinsichtlich Ersatzteilhaltung, Wartung oder dergleichen wird hingewiesen.

Der (die) Stromverbraucher ist (sind) meist fahrzeugfremde Stromverbraucher; es kann sich jedoch auch um am Fahrzeug mitgeführte Stromverbraucher oder Kombinationen von Stromverbrauchern dieser beiden Arten handeln. Als bevorzugte Beispiele zu versorgender Stromverbraucher seien Elektroschweißgeräte, fahrzeugfremde Elektromotoren, fahrzeugfremde elektrische Wärmeerzeugung, fahrzeugfremde Beleuchtung, Lasergeräte. Linearbeschleuniger, elektrisch betriebene Lade- und Entladeeinrichtungen, elektrisch betriebene, nach oben ausfahrbare Plattformen und dergleichen genannt.

Entsprechend den Einsatzfällen der geschilderten Art handelt es sich bei dem erfindungsgemäß eingesetzten Fahrzeug vorzugsweise um ein schienenungebundenes Fahrzeug. Als Beispiele für den kraftstoffverbrennenden Motor des Fahrzeugs seien Verbrennungsmotoren in Dieselbauart oder in Otto-Bauart sowie Gasturbinen genannt. Der Elektromotor oder die Elektromotoren für den Antrieb des Fahrzeugs sind antriebsradzugeordnet in dem Sinne, daß sie dem jeweiligen Antriebsrad räumlich eng zugeordnet sind oder vorzugsweise sogar antriebsradintegriert sind (vergleiche z.B. EP—A—52344). Besonders bevorzugt ist, wenn jedem Antriebsrad oder zumindest den Rädern des überwiegenden Anteils der Achsen des Fahrzeugs Elektromotoren im beschriebenen Sinn zugeordnet sind. Unter "Antriebsrad" wird vorliegend nicht nur ein auf dem Untergrund abrollendes und durch Reibungskräfte zum Untergrund Antriebskraft lieferndes Rad verstanden, sondern auch ein Rad, das sein Drehmoment an ein Antriebselement mit Bodenkontakt weitergibt; als bevorzugtes Beispiel hierfür sei ein die Kette eines Kettenfahrzeugs antreibendes Kettenrad genannt, beispielsweise im Fall vom Erdbewegungsmaschinen.

Es liegt in der Natur der Erfindung, daß das Fahrzeug der genannten speziellen Bauart vorzugsweise als Stromerzeugungsaggregat für einen oder mehrere Stromverbraucher verwendet wird, die einzeln oder gemeinsam einen hohen Strombedarf haben. Wenn auch bei der Erfindung die Verwendung des Fahrzeugs als Stromerzeugungsaggregat im Vordergrund steht, so ist doch nicht ausgeschlossen, daß ein Anteil der Leistung des kraftstoffverbrennenden Motors auch während des Betriebs des Fahrzeugs als Stromerzeugungsaggregat über den Generator und den bzw. die Elektromotoren in Antriebsleistung für das Fahrzeug umgesetzt wird, so daß—mit anderen Worten ausgedrückt—das Fahrzeug während seiner Funktion als Stromerzeugungsaggregat mit Antriebskraft verfahren wird. Bevorzugt ist es jedoch, das Fahrzeug im stehenden Zustand als Stromerzeugungsaggregat für mindestens einen fahrzeugmitgeführten oder einen fahrzeugfremden Stromverbraucher einzusetzen.

Der kraftstoffverbrennende Motor des Fahrzeugs muß nicht für eine erforderliche Spitzenleistung sondern kann für eine mittlere Leistung ausgelegt sein und kann durchweg in einem wirkungsgradgünstigen, mittleren Drehzahlbereich laufen.

Vorzugsweise ist die elektronische Steuerung des Elektromotors bzw. der Elektromotoren und/oder des Generators und/oder des Schwungradspeichers auf mehrere Untersteuerungen aufgeteilt, die jeweils nur einen Teil der Spulen bzw. Elektromagnetpole des betreffenden Aggregats steuern. Diese dezentralisierte Steuerungsart bringt eine ganze Reihe von Vorteilen mit sich, unter denen als die wohl wichtigsten besonders hervorgehoben werden: Die Steuerungsleistung jeder Untersteuerung ist kleiner, so daß man mit wesentlich preisgünstigeren, weniger Wärme erzeugenden elektronischen Bauteilen auskommt; die Funktion des betreffenden Aggregats wird durch Ausfall einer Untersteuerung nicht zwangsläufig unterbunden.

Vorzugsweise ist zwischen dem Generator und dem Stromverbraucher eine elektrische Steuereinheit zum Steuern von Spannung und/oder Stromstärke und/oder Stromfrequenz zwischengeschaltet, wodurch bei der Stromaggregatfunktion des Fahrzeugs elektrische Energie in verbraucherangepaßter Form bereitgestellt werden kann. Die Funktion dieser elektronischen Steuereinheit kann vorzugsweise durch diejenige Steuereinheit(en) übernommen sein, die im Fahrzeug sowie so für die Steuerung des Generators und/oder des Schwungradspeichers und/oder des Elektromotors bzw. der Elektromotoren vorhanden ist (sind). Es versteht sich, daß die elektronische Steuereinheit beim Vorhandensein eines Schwungradspeichers auch zwischen diesem und dem Stromverbraucher und damit nach wie vor in der Gesamtkette vom Generator zum Stromverbraucher vorgesehen sein kann.

Vorzugsweise ist der elektronischen Steuereinheit eine elektronische Regelungseinheit zur Konstanthaltung oder zur determinierten zeitlichen Änderung von Spannung und/oder Stromstärke und/oder Stromfrequenz zugeordnet.

Vorzugsweise steuert bzw. regelt die elektronische Steuereinheit, gegebenenfalls ergänzt durch die elektronische Regelungseinheit, den Generator und/oder den Schwungradspeicher und/oder den kraftstoffverbrennenden Motor des Fahrzeugs zur Anpassung an den gerade abgerufenen Stromverbrauch bei der Stromerzeugungsaggregatfunktion des Fahrzeugs.

Vorzugsweise ist die Steuereinheit und/oder Regelungseinheit für mehrerer Stromverbraucher auf mehrere Untereinheiten aufgeteilt, wobei die weiter vorn im Zusammenhang mit der Unterteilung der Steuerung des Elektromotors bzw. der Elektromotoren und/oder des Generators und/oder des Schwungradspeichers in mehrere Untersteuerungen dargelegten Vorteile zum Tragen kommen. Es muß nicht für jeden Verbraucher eine eigene Untereinheit vorhanden sein, sondern es kann auch eine Untereinheit mehrere Verbraucher bedienen.

Es gibt den Fall, daß ein oder mehrere Stromverbraucher zu bestimmten Zeiten keinen Strom verbrauchen sondern durch äußeren Energiezufluß beaufschlagt werden. Als Beispiele seien genannt: Bremsbetrieb eines ansonsten stromverbrauchenden Elektromotors; Absenken einer nach oben ausfahrbaren Hubplattform und dergleichen. In diesen Situationen kann vorzugsweise eine Rückspeisung elektrischer Energie vom Stromverbraucher zu dem Elektromotor bzw. den Elektromotoren des Fahrzeugs und/oder zur Energiespeichereinrichtung vorgesehen sein. Dies wird vorzugsweise durch eine oder mehrere elektronische Steuereinheit(en) gesteuert.

Vorzugsweise weist das Fahrzeug eine zusätzliche Stromerzeugende Stromquelle auf, insbesondere in Form von mindestens einer Brennstoffzelle. Diese Stromquelle kann insbesondere der Deckung von Spitzenbedarf dienen oder eine Notfallfunktion haben.

Die genannten Steuereinheiten können als Spannungssteller, Stromsteller, Frequenzsteller ausgebildet sein, wobei als besonderes Beispiel Vierquadrantensteller genannt werden.

Der Inhalt der in der vorliegenden Beschreibung genannten europäischen Patentanmeldungen wird hiermit durch ausdrückliche Bezugnahme zum Bestandteil des Offenbarungsgehalts der vorliegenden Beschreibung gemacht.

Die geschilderte Bauart des Fahrzeugs kann man auch als "Fahrzeug mit elektrischem Getriebe" bezeichnen, da das Zusammenwirken von Generator, gegebenenfalls Energiespeichereinrichtung und Antriebs-Elektromotor(en) einen Fahrzeugantrieb ohne mechanisches Getriebe ermöglicht, weil die Elektromotoren in Drehzahl und Leistung elektronisch gesteuert werden können.

## Patentansprüche

1. Verwendung eines Fahrzeugs der Bauart, bei der ein kraftstoffverbrennender Motor, ein von dem Motor antreibbarer Generator, ein Schwungradspeicher, dem elektrische Energie zuführbar und entnehmbar ist, und ein oder mehrerere antriebsradzugeordnete Elektromotoren vorgesehen sind, wobei der Generator, der Schwungradspeicher und der Elektromotor oder die Elektromotoren elektrisch miteinander verbunden sind, als Stromerzeugungsaggregat für einen oder mehrere fahrzeugantriebsfremde Stromverbraucher, deren kurzzeitig hoher Strombedarf mit Hilfe des Schwungradspeichers gedeckt wird, wobei der Generator und/oder der Schwungradspeicher und/oder der Elektromotor oder die Elektromotoren mit hochkoerzitiven Dauermagneten und elektronischer Steuerung aufgebaut sind.

2. Verwendung nach Anspruch 1, wobei des Fahrzeug im stehenden Zustand als Stromerzeugungsaggregat für mindestens einen fahrzeugmitgeführten oder einen fahrzeugfremden Stromverbraucher eingesetzt wird.

3. Verwendung nach einem der Ansprüche 1 bis 2, wobei der Elektromotor oder die Elektromotoren als multiple(r), elektronisch gesteuerte(r) Dauermagnetmotor(en) ausgebildet ist (sind).

4. Verwendung nach einem der Ansprüche 1 bis 3, wobei der Generator als multipler, elektronisch gesteuerter Dauermagnetgenerator ausgebildet ist.

5. Verwendung nach einem der Ansprüche 1 bis 4, wobei der Schwungradspeicher als mit Dauermagneten aufgebauter, multipler. Schwungradspeicher mit elektronisch gesteuerter Einspeisung elektrischer Energie und elektronisch gesteuerter Entnahme elektrischer Energie ausgebildet ist.

6. Verwendung nach einem der Ansprüche 3 bis 5, wobei die elektronische Steuerung des Elektromotors bzw. der Elektromotoren und/oder des Generators und/oder des Schwungradspeichers auf mehrere Untersteuerungen aufgeteilt ist, die jeweils nur einen Teil der Spulen des betreffenden Aggregats steuern.

7. Verwendung nach einem der Ansprüche 1 bis 6, wobei zwischen dem Schwungradspeicher und dem Stromverbraucher eine elektronische Steuereinheit zum Steuern von Spannung und/oder Stromstärke und/oder Stromfrequenz zwischengeschaltet ist.

8. Verwendung nach Anspruch 7, wobei der elektronischen Steuereinheit eine elektronische Regelungseinheit zur Konstanthaltung oder zur determinierten zeitlichen Änderung von Spannung und/oder Stromstärke und/oder Stromfrequenz zugeordnet ist.

9. Verwendung nach Anspruch 7 oder 8, wobei die elektronische Steuereinheit, vorzugsweise ergänzt durch die elektronische Regelungseinheit, den Generator und/oder den Schwungradspeicher und/oder den kraftstoffverbrennenden Motor zur Anpassung an den gerade abgerufenen Stromverbrauch steuert bzw. regelt.

10. Verwendung nach einem der Ansprüche 7 bis 9, wobei die Steuereinheit und/oder die Regelungseinheit für mehrere Stromverbraucher auf mehrere Untereinheiten aufgeteilt ist.

11. Verwendung nach einem der Ansprüche 1 bis 10, wobei eine elektronische Steuereinheit für eine Rückspeisung elektrischer Energie vom Stromverbraucher zu dem Elektromotor bzw. den Elektromotoren und/oder zu dem Schwungradspeicher im Falle des durch äußeren Energiezufluß beaufschlagten Stromverbrauchers vorgesehen ist.

12. Verwendung nach einem der Ansprüche 1 bis 11, wobei das Fahrzeug eine zusätzliche, Stromerzeugende Stromquelle, vorzugsweise mindestens eine Brennstoffzelle, aufweist.

## Revendications

1. Procédé d'utilisation d'un véhicule du type dans lequel sont prévus un moteur à combustion interne, un générateur entraînable par le moteur, un accumulateur à volant d'inertie, vis-à-vis duquel on peut apporter et prélever de l'énergie électrique, et un ou plusieurs moteurs électriques associés à une ou plusieurs roues motrices, le générateur, l'accumulateur à volant d'inertie et le moteur électrique ou les moteurs électriques étant reliés ensemble électriquement, servant de groupe de production de courant pour un ou plusieurs consommateurs électriques étrangers à l'entraînement du véhicule, dont la consommation électrique, qui est passagèrement élevée, est couverte à l'aide de l'accumulateur à volant d'inertie, le générateur et/ou l'accumulateur à volant d'inertie et/ou le moteur électrique ou les moteurs électriques étant construits avec des aimants permanents hautement coercitifs et une commande/régulation électronique.

2. Procédé d'utilisation selon la revendication 1, dans lequel, le véhicule étant arrêté, il sert de groupe de production de courant pour au moins un consommateur électrique, transporté avec le véhicule ou étranger au véhicule.

3. Procédé d'utilisation selon l'une des revendications 1 à 2, dans lequel le moteur électrique ou les moteurs électriques est (sont) réalisés sous forme de moteurs(s) multiple(s), à aimant permanent, à commande électronique.

4. Procédé d'utilisation selon l'une des revendications 1 à 3, dans lequel le générateur est réalisé sous forme de générateur multiple à aimant permanent, à commande électronique.

5. Procédé d'utilisation selon l'une des revendications 1 à 4, dans lequel l'accumulateur à volant d'inertie est réalisé sous forme d'accumulateur multiple à volant d'inertie, construit avec des aimants permanents, avec alimentation en énergie électrique commandée électroniquement et prélèvement d'énergie électrique commandée électroniquement.

6. Procédé d'utilisation selon l'une des revendications 3 à 5, dans lequel la commande électronique du moteur électrique ou des moteurs électriques et/ou de l'accumulateur à volant d'inertie est répartie sur plusieurs sous-commandes ne pilotant chacune qu'une partie des bobines du groupe concerné.

7. Procédé d'utilisation selon l'une des revendications 1 à 6, dans lequel une unité de commande électronique, servant à la commande de la tension et/ou de l'intensité et/ou de la fréquence est connectée de manière intermédiaire entre l'accumulateur à volant d'inertie et le consommateur électrique.

8. Procédé d'utilisation selon la revendication 7, dans lequel une unité de régulation électronique servant à maintenir constant ou à effectuer une variation temporelle déterminée de la tension et/ou de l'intensité et/ou de la fréquence est associée à l'unité de commande électronique.

9. Procédé d'utilisation selon l'une des revendications 7 ou 8, dans lequel l'unité de commande électronique, qui est de préférence complétée par l'unité de régulation électronique, commande et/ou règle le générateur et/ou l'accumulateur à volant d'inertie et/ou le moteur à combustion interne en vue de l'adaptation à la consommation électrique justement appelée à ce moment.

10. Procédé d'utilisation selon l'une des revendications 7 à 9, dans lequel l'unité de commande et/ou l'unite de régulation servant à plusieurs consommateurs électriques est répartie sur plusieurs sous-unités.

11. Procédé d'utilisation selon l'une des revendications 1 à 10, dans lequel il est prévu une unité de commande électronique servant à la réinjection de l'énergie électrique provenant du consommateur électrique vers le moteur électrique ou les moteurs électriques et/ou l'accumulateur à volant d'inertie, dans le cas d'un consommateur électrique sollicité par une amenée d'énergie extérieure.

12. Procédé d'utilisation selon l'une des revendications 1 à 11, dans lequel le véhicule présente une source électrique supplémentaire, produisant du courant, de préférence au moins une pile à combustible.

## Claims

1. The use of a vehicle of a construction in which a fuel-burning engine, a generator adapted to be driven by the engine, a flywheel accumulator to which electrical energy can be supplied and from which electrical energy can be withdrawn, and one or more drive-wheel-associated electric motors are provided, the generator, the flywheel accumulator and the electric motor or motors being electrically connected to each other, as a current generating aggregate for one or more current consumers separate from the vehicle drive, with the shortly high current demand of said consumer(s) being met with the aid of the flywheel accumulator, and the generator and/or the flywheel accumulator and/or the electric motor or motors being constructed whith highly coercive permanent magnets and electronic control.

2. The use according to claim 1, wherein the vehicle is used in a stationary condition as a current generating aggregate for at least one current consumer provided on the vehicle or provided separately therefrom.

3. The use according to any one of claims 1 to 2, wherein the electric motor or the electric motors is (are) designed as multiple electronically controlled permanent magnet motor(s).

4. The use according to any one of claims 1 to 3, wherein the generator is designed as a multiple electronically controlled permanent magnet generator.

5. The use according to any one of claims 1 to 4, wherein the flywheel accumulator is designed as a multiple flywheel accumulator with permanent magnets and with electronically controlled supply of electrical energy and electronically controlled withdrawal of electrical energy.

6. The use according to any one of claims 3 to 5, wherein the electronic control of the electric motor or electric motors and/or of the generator and/or of the flywheel accumulator is divided to several sub-controls which each control only part of the coils of the respective aggregate.

7. The use according to any one of claims 1 to 6, wherein an electronic control unit is interconnected between the flywheel accumulator and the current consumer for controlling voltage and/or current intensity and/or current frequency.

8. The use according to claim 7, wherein the electronic control unit has an electronic regulating unit associated therewith for keeping constant, or for determined changes in time of, voltage and/or current intensity and/or current frequency.

9. The use according to claim 7 or 8, wherein the electronic control unit, preferably supplemented by the electronic regulating unit, controls or regulates the generator and/or the flywheel accumulator and/or the fuel-burning engine for adaptation to the just requested current consumption.

10. The use according to any one of claims 7 to 9, wherein the control unit and/or the regulating unit for several current consumers is divided to several sub-units.

11. The use according to any one of claims 1 to 10, wherein an electronic control unit is provided for feedback of electrical energy from the current consumer to the electric motor or motors and/or to the flywheel accumulator in case of an external energy feed to the current consumer.

12. The use according to any one of claims 1 to 11, wherein the vehicle comprises an additional current-generating current source, preferably at least one fuel cell.